# EUROPÄISCHE PATENTANMELDUNG

(11) **EP 3 909 925 A1**
(43) Veröffentlichungstag der Anmeldung: **17.11.2021**
(21) Anmeldenummer: 20174758.1
(22) Anmeldetag: 14.05.2020
(51) Int. Cl.: C03C 8/04, C03C 17/00, C03C 17/04, C03C 17/23, C03C 17/36

(54) **VERFAHREN ZUR HERSTELLUNG EINES GLASPRODUKTS**

(71) Anmelder: SAINT-GOBAIN GLASS FRANCE, 92400 Courbevoie (FR)
(72) Erfinder: HAGEN, Jan, 53123 Bonn (DE); PENGEL, Stefanie, 52072 Aachen (DE); JAMART, Juliette, 60200 Compiégne (FR); NEFT, Anna, 52134 Herzogenrath (DE)
(74) Vertreter: Hermanns, Ellen

(57) **Zusammenfassung**

Die Erfindung betrifft ein Verfahren zur Herstellung eines Glasprodukts, umfassend eine beschichtete Scheibe (1), die auf einer Seite eine funktionale Beschichtung (2) und eine Emaille-Beschichtung (4) aufweist, wobei zwischen der funktionalen Beschichtung (2) und der Emaille-Beschichtung (4) eine Oxid enthaltende Schutzschicht (3) angeordnet ist, wobei das Verfahren das Aufbringen der Oxid enthaltenden Schutzschicht (3) durch atmosphärische Plasmaabscheidung umfasst. Die Glasprodukte können Verbundgläser sein und eignen sich insbesondere als Verglasung für Kraftfahrzeuge.

## Beschreibung

Die Erfindung betrifft ein Verfahren zur Herstellung eines Glasprodukts, insbesondere einer Fahrzeugscheibe, die eine Emaille- und eine funktionale Schicht auf einer Scheibenseite aufweist, und das nach dem Verfahren erhaltene Glasprodukt.

Glasprodukte für Automobilanwendungen sind oft mit funktionalen Beschichtungen und dekorativem Emailledruck ausgestattet. Die Emaille wird auf bestimmte Bereiche aufgetragen, um Teile wie z.B. Spiegelhalter, elektrische Anschlüsse oder Montageteile vor der Außensicht zu verbergen oder um eine Oberfläche zu schaffen, auf der Klebsysteme (einschließlich UV-Schutz) aufgebracht werden können.

Auch bei Gebäudeverglasungen wird häufig ein dekorativer Emailledruck in Verbindung mit funktionalen Schichten verwendet. Die Emaille wird vorzugsweise im Randbereich der beschichteten Scheiben aufgebracht um einen dekorativen, lichtundurchlässigen Emaille-Rahmen auf der Scheibe zu erzeugen.

Eine häufig eingesetzte funktionale Beschichtung ist eine transparente IR-reflektierende Beschichtung, die als Sonnenschutzbeschichtung dafür vorgesehen ist, die Aufheizung des Fahrzeuginnenraums durch den IR-Anteil der Sonnenstrahlung zu verringern. IR-reflektierende Beschichtungen sind beispielsweise Dünnschichtstapel enthaltend zwei oder drei Schichten aus Silber und weitere dielektrische Schichten.

Bei Glasprodukten, z.B. Gebäudeverglasungen und Automobilprodukten wie Windschutzscheiben oder laminierten Schiebedächern, können funktionale Beschichtungen und Standard-Emailledrucke für die Automobilanwendung nicht auf dieselbe Glasoberfläche aufgebracht werden, da beide Beschichtungen während der Wärmebehandlung miteinander reagieren. Beim Aufheizen bildet z.B. in der Emaillepaste enthaltenes Wismut in Wechselwirkung mit nitridischen Schichten der funktionalen Beschichtung Blasen, die makroskopisch als gräuliche Verfärbung der Emaille erscheinen.

Daher werden z.B. funktionale Beschichtungen und heizbare Beschichtungen in der Regel auf einer Scheibenseite (z.B. Fläche 3) von Verbundgläsern aufgetragen, während die Emaille in der Regel auf einer anderen Scheibenseite (z.B. Fläche 2) aufgebracht wird. Die Effizienz von IR- und heizbaren Beschichtungen kann durch Anwendung auf die mit der Emaille versehenen Scheibenseite (z.B. Fläche 2) erhöht werden.

Es ist bekannt, zwischen beiden Beschichtungen eine Schutzschicht als Opferschicht aufzubringen, um die Wechselwirkung der funktionalen Beschichtung und des dekorativen Emailledrucks zu verhindern und die ursprünglichen Funktionen und ästhetischen Aspekte beider Beschichtungen zu erhalten. Die Schutzfunktion von oxidischen Schichten, insbesondere SiO₂ enthaltenden Schichten, gegen die Wechselwirkungen von Emaille und funktionaler Beschichtung ist dabei bekannt.

WO 2019/106264 A1 beschreibt das Aufbringen einer oxidischen Schutzschicht zwischen einer funktionalen, Nitrid enthaltenden Beschichtung und einem dekorativen Emailledruck, so dass sie als Opferschicht wirkt und die Wechselwirkung zwischen der funktionalen Beschichtung und dem Emailledruck verhindert und die ursprünglichen Funktionen beider Beschichtungen erhält. Nach diesem Stand der Technik kann die Schutzschicht als Nassbeschichtung oder durch Magnetronabscheidung aufgebracht werden.

Insbesondere wurde eine Herstellung der Schutzschicht mittels Magnetron-Sputterverfahren und durch Aufbringen einer Sol-Gel-Nassbeschichtung im Siebdruckverfahren untersucht.

Allerdings wurde beim Aufbringen einer Schutzschicht nach dem Sol-Gel-Verfahren keine ausreichend zufriedenstellende ästhetische Qualität des Endproduktes erhalten, da im emaillierten Bereich ein sehr inhomogener optischer Eindruck entsteht. Das Magnetron-Sputterkonzept für eine Schutzschicht ist für die lokale Anwendung ohne Maskentechnik nicht realisierbar und die Herstellung einer ausreichenden Schichtdicke der Schutzschicht in der Standard-Schichtherstellung ist mit hohem apparativen Aufwand und hohen Kosten verbunden, was für eine industrielle Fertigung nicht tragbar ist.

Die Aufgabe der Erfindung bestand darin, ein Verfahren zur Herstellung eines Glasprodukts mit einer funktionalen Beschichtung, insbesondere IR-reflektierenden Beschichtung, und einer Emaille-Beschichtung auf einer Scheibenseite bereitzustellen, bei dem eine Schutzschicht zwischen der funktionalen Beschichtung und der Emaille-Beschichtung aufgebracht wird, um Wechselwirkungen zwischen den beiden Schichten zu vermeiden, wobei die Schutzschicht lokal genau in den erforderlichen Bereichen und mit hoher Geschwindigkeit abgeschieden werden kann, ohne das optische Aussehen des Glasprodukts zu beinträchtigen. Außerdem soll der apparative Aufwand möglichst gering sein und das Verfahren mit relativ geringen Kosten verbunden sein.

Die Aufgabe der vorliegenden Erfindung wird durch ein Verfahren gemäß dem unabhängigen Anspruch 1 gelöst. Die Erfindung betrifft auch das nach dem Verfahren erhältliche Glasprodukt gemäß dem weiteren unabhängigen Anspruch. Bevorzugte Ausführungen gehen aus den Unteransprüchen hervor.

Die vorgestellte Erfindung löst das Problem, indem eine Schutzschicht durch atmosphärische Plasmaabscheidung (atmospheric plasma deposition, APD) aufgebracht wird, um die Wechselwirkung zwischen Emaille und funktionaler Beschichtung, insbesondere IR-reflektierender Beschichtung, zu verhindern. Der Vorteil dieser Technologie besteht darin, dass es möglich ist, eine Schutzschicht genau an der Stelle abzuscheiden, an der der Schutz benötigt wird, z.B. an der Stelle, an der der Emailledruck in direktem Kontakt mit der funktionalen Beschichtung kommt. Ein weiterer Vorteil der APD ist, dass sie eine schnelle Abscheidung der Schutzschicht bei hoher Geschwindigkeit (mehrere m/min) ermöglicht. Diese Geschwindigkeit dürfte mit der Zykluszeit in einer Produktionsanlage kompatibel sein, die bei der Herstellung solcher Glasprodukte in der Praxis eingesetzt wird. Die genaue lokale Abscheidung der Schutzschicht ist dabei ohne Maskentechnik möglich.

Diese Erfindung ermöglicht das Aufbringen von funktionalen Beschichtungen und Emaille auf ein und derselben Fläche. Die durch atmosphärische Plasmaabscheidung aufgebrachte Schutzbarriereschicht wirkt als Opferschicht und verhindert bei Wärmebehandlungen, z.B. zum Biegen oder Tempern, die Wechselwirkung zwischen Funktionsschicht und Emaille.

Die Erfindung wird im Folgenden näher erläutert. Die folgenden Angaben werden bezüglich des erfindungsgemäßen Verfahrens oder des erfindungsgemäßen Glasprodukts wie einer Verbundscheibe gemacht, beziehen sich soweit anwendbar aber immer sowohl auf das Verfahren als auch auf das Glasprodukt, sofern nicht ausdrücklich anders angegeben. Die Begriffe "Oxid" und "Nitrid" können substöchiometrische, überstöchiometrische und/oder stöchiometrische Oxide oder Nitride bedeuten.

Gemäß der Erfindung wird ein Verfahren zur Herstellung eines Glasprodukts bereitgestellt, wobei das Glasprodukt eine beschichtete Scheibe umfasst, die auf einer Seite eine funktionale Beschichtung und eine Emaille-Beschichtung aufweist, wobei zwischen der funktionalen Beschichtung und der Emaille-Beschichtung eine Oxid enthaltende Schutzschicht angeordnet ist, wobei das Verfahren folgende Schritte umfasst:
a) Aufbringen einer ersten Beschichtung auf die Scheibe, wobei die erste Beschichtung die funktionale Beschichtung oder die Emaille-Beschichtung ist,
b) Aufbringen der Oxid enthaltenden Schutzschicht auf die aufgebrachte erste Beschichtung durch atmosphärische Plasmaabscheidung und
c) Aufbringen einer dritten Beschichtung auf die aufgebrachte, Oxid enthaltende Schutzschicht, wobei die dritte Beschichtung die Emaille-Beschichtung ist, wenn die erste Beschichtung die funktionale Beschichtung ist, oder die dritte Beschichtung die funktionale Beschichtung ist, wenn die erste Beschichtung die Emaille-Beschichtung ist.

Die funktionale Beschichtung ist bevorzugt eine IR-reflektierende Beschichtung oder eine Sonnenschutzbeschichtung. Weitere Beispiele für funktionale Beschichtungen sind Beschichtungen mit geringer Emissivität und heizbare Beschichtungen.

Das Glasprodukt umfasst eine oder mehrere Scheiben. Das Glasprodukt kann nur eine Einzelscheibe umfassen. In einer bevorzugten Ausführungsform ist das Glasprodukt ein Verbundglas. In einem Verbundglas sind zwei, drei oder mehr Scheiben, bevorzugt zwei Scheiben, mit einer oder mehreren Zwischenschichten zwischen den Scheiben verbunden. In einer weiteren bevorzugten Ausführungsform ist das Produkt eine Doppelverglasungseinheit. In einer Doppelverglasungseinheit sind zwei Scheiben über einen Rahmen als Abstandshalter miteinander verbunden.

In einer bevorzugten Ausführungsform umfasst das Glasprodukt daher neben der beschichteten Scheibe eine zweite Scheibe, die mit der beschichten Scheibe mit einer oder mehreren Zwischenschichten unter Bildung eines Verbundglases verbunden ist. In diesem Fall umfasst das Verfahren das Anordnen der nach den Schritten a), b) und c) hergestellten beschichteten Scheibe, einer oder mehrerer Zwischenschichten und einer zweiten Scheibe in dieser Reihenfolge und Laminieren der Anordnung durch Erwärmen und gegebenenfalls Anwenden von Druck unter Bildung der Verbundscheibe.

Die eine oder mehreren Scheiben können unabhängig voneinander aus anorganischem Glas und/oder organischem Glas (Kunststoff) sein. Die eine oder mehreren Scheiben können z.B. aus Flachglas, Quarzglas, Borosilikatglas, Kalk-Natron-Glas, Aluminosilikatglas und/oder Keramik/Glaskeramik sein. Die eine oder mehreren Scheiben sind bevorzugt aus Kalk-Natron-Glas. Die eine oder mehreren Scheiben sind bevorzugt Floatglas. Die eine oder mehreren Scheiben können z.B. unabhängig voneinander eine Dicke im Bereich von 0,4 bis 12,0 mm, z.B. 1 bis 3 mm, bevorzugter 1,6 bis 2,5 mm, aufweisen.

Sofern das Glasprodukt ein Verbundglas ist, werden die Scheiben durch eine oder mehrere zwischen den Scheiben angeordnete Zwischenschichten verklebt bzw. verbunden. Die Zwischenschichten werden insbesondere aus polymeren Folien, in der Regel thermoplastischen Folien gebildet. Die Zwischenschicht kann z.B. Polyvinylbutyral (PVB), Ethylenvinylacetat, Polyurethan, Polypropylen, Polyacrylat, Polyethylen, Polycarbonat, Polymethylmetacrylat, Polyvinylchlorid, Polyacetatharz, Gießharz, Acrylat, fluoriniertes Ethylen-Propylen, Polyvinylfluorid und/oder Ethylen-Tetrafluorethylen und/oder ein Gemisch und/oder ein Copolymer davon enthalten.

In einer bevorzugten Ausführungsform sind die eine oder mehreren Zwischenschichten jeweils unabhängig gebildet aus Polyvinylbutyral (PVB)-Folie, thermoplastischer Polyurethan (TPU)-Folie, Ethylen-Vinylacetat-Copolymer (EVA)-Folie oder einer Kombination davon. In einer bevorzugten Ausführungsform sind die eine oder mehreren Zwischenschichten aus PVB-Folien gebildet.

Die eine oder mehreren Zwischenschichten weisen, sofern eingesetzt, bevorzugt jeweils unabhängig eine Dicke im Bereich von 0,03 mm bis 0,9 mm, besonders bevorzugt 200 bis 800 µm (Mikrometer), auf, wobei es sich bevorzugt um PVB-Folien bzw. PVB-Schichten handelt.

Das Glasprodukt umfasst eine beschichtete Scheibe, die auf einer Seite eine funktionale Beschichtung und eine Emaille-Beschichtung aufweist. Sofern das Glasprodukt ein Verbundglas ist und zwei oder mehr Scheiben umfasst, können zwei oder mehr Scheiben jeweils auf einer Seite mit einer funktionalen Beschichtung und einer Emaille-Beschichtung versehen sein; es ist aber in der Regel bevorzugt, dass nur eine Scheibe mit einer funktionalen Beschichtung und einer Emaille-Beschichtung versehen ist.

Bei einem Verbundglas werden die enthaltene erste Scheibe und zweite Scheibe bezogen auf der Orientierung im eingebauten Zustand häufig als Innenscheibe und Außenscheibe bezeichnet, wobei die Innenscheibe die dem Innenraum (Fahrzeuginnenraum) zugewandte Scheibe bezeichnet, und die Außenscheibe die der äußeren Umgebung zugewandten Scheibe bezeichnet. Folgende Nummerierung ist dabei üblich und wird auch hier verwendet: Fläche 1: nach außen gerichtete Seite der Außenscheibe, Fläche 2: nach innen gerichtete Seite der Außenscheibe, Fläche 3: nach außen gerichtete Seite der Innenscheibe, Fläche 4: nach innen gerichtete Seite der Außenscheibe. Die funktionale Beschichtung und die Emaille-Beschichtung können prinzipiell auf irgendeiner dieser Flächen angeordnet sein.

In einer bevorzugten Ausführungsform ist das Glasprodukt ein Verbundglas und die funktionale Beschichtung und die Emaille-Beschichtung befinden sich auf der nach innen gerichtete Seite der Außenscheibe, d.h. der Fläche 2.

Das Glasprodukt, insbesondere die Verbundscheibe, kann plan oder in einer oder in mehreren Richtungen des Raumes gebogen sein. Das Glasprodukt bzw. Verbundglas ist bevorzugt gebogen, wie es für Kraftfahrzeugscheiben üblich ist. Ein planes Glasprodukt eignet sich z.B. als Scheibe für Busse, Züge oder Traktoren. In der Regel ist es bei einem gebogenen Glasprodukt bevorzugt, die funktionale Beschichtung, die Schutzschicht und die Emaille auf eine plane Scheibe aufzubringen und in einem anschließenden Verfahrensschritt die Scheibe zu biegen.

Das erfindungsgemäße Verfahren zur Herstellung eines Glasprodukts umfasst folgende Schritte:
a) Aufbringen einer ersten Beschichtung auf die Scheibe, wobei die erste Beschichtung die funktionale Beschichtung oder die Emaille-Beschichtung ist,
b) Aufbringen der Oxid enthaltenden Schutzschicht auf die aufgebrachte erste Beschichtung durch atmosphärische Plasmaabscheidung und
c) Aufbringen einer dritten Beschichtung auf die aufgebrachte, Oxid enthaltende Schutzschicht, wobei die dritte Beschichtung die Emaille-Beschichtung ist, wenn die erste Beschichtung die funktionale Beschichtung ist, oder die dritte Beschichtung die funktionale Beschichtung ist, wenn die erste Beschichtung die Emaille-Beschichtung ist.

Im ersten Schritt wird eine erste Beschichtung auf eine Seite der Scheibe aufgebracht, wobei die erste Beschichtung die funktionale Beschichtung oder die Emaille-Beschichtung sein kann. Die Scheibe kann gegebenenfalls vor dem Auftrag der ersten Beschichtung mit einer oder mehreren Vorbeschichtungen versehen werden. Es ist aber bevorzugt, dass die erste Beschichtung direkt auf die unbeschichtete Scheibe aufgetragen wird.

In einer bevorzugten Ausführungsform ist die erste Beschichtung die funktionale Beschichtung und die dritte Beschichtung ist die Emaille-Beschichtung.

Bei der funktionalen Beschichtung, die die erste oder dritte Beschichtung, bevorzugt die erste Beschichtung, sein kann, handelt es sich bevorzugt um eine Beschichtung, die Infrarot (IR)-Strahlen reflektiert. Solche IR-reflektierende Beschichtung sind auf dem Gebiet üblich und dem Fachmann bekannt. In einer weiteren Ausführungsführungsform ist die funktionale Beschichtung eine Sonnenschutzbeschichtung, die eine geringe Emissivität aufweisen kann. Weitere Beispiele für funktionale Beschichtungen sind Beschichtungen mit geringer Emissivität und heizbare Beschichtungen.

Die funktionale Beschichtung ist insbesondere eine transparente Beschichtung. Die funktionale Beschichtung ist bevorzugt ein Schichtstapel aus mehreren Schichten. Die funktionale Beschichtung ist bevorzugt eine Beschichtung, die ein Nitrid, insbesondere ein Siliziumnitrid, wie z.B. Si₃N₄, enthält. Besonders bevorzugt ist die funktionale Beschichtung ein Schichtstapel aus mehreren Schichten, wobei mindestens eine Schicht ein Nitrid enthält oder daraus gebildet ist, wobei bevorzugt mindestens zwei, mindestens drei oder mindestens vier oder vier Schichten ein Nitrid enthalten oder daraus gebildet sind. Diese Schichten werden im Folgenden auch vereinfacht als Schichten auf Nitridbasis bezeichnet. Das Nitrid ist z.B. ein Nitrid aus mindestens einem Element ausgewählt aus Aluminium, Silizium, Zirkonium und Titan, wobei Siliziumnitrid und/oder Silizium-Zirkonium-Mischnitrid besonders bevorzugt sind. Die eine oder mehreren Schichten auf Nitridbasis haben bevorzugt eine Dicke in einem Bereich von 2 bis 100 nm, insbesondere von 5 bis 80 nm.

In einer besonderes bevorzugten Ausführungsform enthält die einzige Schicht einer einschichtigen funktionalen Beschichtung oder die oberste Schicht einer mehrschichtigen funktionalen Beschichtung ein Nitrid oder ist daraus gebildet, so dass diese nitridische Schicht in direktem Kontakt mit der Oxid enthaltenden Schutzschicht ist.

Schichten auf Nitridbasis werden üblicherweise in vielen Stapeln dünner Schichten verwendet, da sie vorteilhafte Blockiereigenschaften aufweisen, indem sie die Oxidation anderer im Stapel vorhandener Schichten, insbesondere funktionaler Schichten, vermeiden. Weiterhin weisen Schichten auf Nitridbasis einen Brechungsindex auf, welcher geeignet ist, funktionale Beschichtungen optisch anzupassen, beispielsweise um sie im sichtbaren Bereich zu entspiegeln.

Die Nitrid enthaltende Schicht kann z.B. mindestens 50 Gew.-%, bevorzugt mindestens 70 Gew.-% oder mindestens 80 Gew.-% oder mindestens 90 Gew.-% Nitrid enthalten oder aus Nitrid bestehen, wobei dies auch Schichten umfasst, die Verunreinigungen enthalten, ohne ihre Eigenschaften zu beeinflussen.

Der die funktionale Beschichtung bildende Schichtstapel kann z.B. aus 4 bis 50, bevorzugt 10 bis 30 einzelnen Schichten gebildet werden. Der die funktionale Beschichtung bildende Schichtstapel kann z.B. eine Gesamtdicke von 30 nm bis 400 nm aufweisen.

Der Schichtstapel enthält vorzugsweise neben der mindestens einen Schicht auf Nitridbasis eine oder mehrere weitere funktionale Schichten. Die funktionalen Schichten sind bevorzugt ausgewählt aus einer oder mehreren elektrisch leitenden Schichten und/oder einer oder mehreren Anpassungsschichten, auch als dielektrische Schichten bezeichnet, insbesondere einer oder mehreren elektrisch leitenden Schichten und gegebenenfalls einer oder mehreren Anpassungsschichten oder dielektrischen Schichten. Dielektrische Schichten dienen z.B. zur Entspiegelung von einer metallischen funktionalen Schicht, zum Schutz der leitenden Schicht vor Oxidation und Einstellung optischer Merkmale des Gesamtschichtaufbaus.

Die eine oder mehreren elektrisch leitfähigen Schichten sind z.B. aus Metallschichten, insbesondere Silber oder Niob, oder einem transparenten leitenden Oxid (TCO), insbesondere ausgewählt aus Indium-Zinn-Oxid, dotiertem Zinnoxid oder dotiertem Zinkoxid, oder einem transparenten leitenden Nitrid, insbesondere Titannitrid. Typische Dicken der Einzelschichten der Metallbeschichten, auch als TCC (transparent conductive coating) bezeichnet, liegen im Bereich von 2 bis 50 nm, bevorzugt im Bereich von 5 nm bis 25 nm. Die Dicke der von transparenten leitenden Oxide (TCO) liegt bevorzugt jeweils im Bereich von 10 nm bis 2 µm, bevorzugter 30 nm bis 500 nm und insbesondere 40 bis 150 nm.

Diese elektrisch leitfähigen Schichten weisen ein geringes Emissionsvermögen auf, das der Verglasung hervorragende Wärmedämmeigenschaften verleiht (IR-Reflexion). Dies ermöglicht es, bei warmem Wetter einen Teil der Sonnenstrahlung nach außen zu reflektieren und damit die Erwärmung von innen zu begrenzen. Dies gilt für Verglasungen an Fahrzeugen und an Gebäuden.

Bei der oder den Anpassungsschichten handelt es sich bevorzugt um Zinkoxid enthaltende Schichten. Weitere funktionale Schichten, die im Schichtstapel enthalten sein können, sind Glättungsschichten, die z.B. Zink-Zinn-Mischoxid enthalten, und/oder eine Blockerschicht, die bevorzugt zumindest Nickel, Chrom oder Legierungen davon enthält. Die Blockerschicht grenzt in der Regel an eine elektrisch leitfähige Schicht zum Schutz vor einer oxidierenden Atmosphäre.

Unabhängig davon, ob die funktionale Beschichtung oder der die funktionale Beschichtung bildende Schichtstapel als erste oder dritte Schicht aufgebracht wird, können die dafür üblichen Auftragsverfahren eingesetzt werden. Die funktionale Beschichtung oder mindestens ein Teil des die funktionale Beschichtung bildenden Schichtstapels, insbesondere die elektrisch leitfähigen Schichten und/oder die Schichten auf Nitridbasis, kann z.B. durch chemische Gasphasenabscheidung (CVD) oder durch Sputtern, insbesondere unterstützt durch ein Magnetfeld (Magnetron-Prozess), insbesondere durch magnetfeldunterstützte Kathodenzerstäubung, abgeschieden werden.

Eine geeignete funktionale Beschichtung aus einem Schichtstapel wird z.B. in der WO 2017/198362 A1 beschrieben, die dort als elektrisch leitfähige Beschichtung bezeichnet wird, worauf hiermit Bezug genommen wird.

Bei der Emaille-Beschichtung, die die erste oder dritte Beschichtung, bevorzugt die dritte Beschichtung, sein kann, handelt es sich im Allgemeinen um eine anorganische Zusammensetzung in einem glasartigen Zustand. Die Emaille wird meist aus Silikaten und/oder Oxiden gebildet, die durch Schmelzen, Fritten oder Sintern in die Beschichtung überführt werden. Dabei wird in der Regel die Emaille-Mischung, gewöhnlich in Form eines Pulvers oder einer Paste, manchmal mit Zusätzen, auf das Substrat aufgebracht und aufgeschmolzen, gewöhnlich bei hohen Temperaturen und kurzer Brenndauer, was nach der Erstarrung die Emaille bildet. Solche Emaille-Beschichtungen sind auf dem Gebiet üblich und dem Fachmann bekannt.

Die Emaille-Beschichtung wird vorzugsweise aus einer Zusammensetzung gebildet, die Wismut, bevorzugt Borosilikat von Wismut oder Borosilikat von Wismut und Zink, und gewöhnlich auch ein Pigment enthält. Die Emaille-Beschichtung enthält vorzugsweise kein Bleioxid.

In einer bevorzugten Ausführungsform umfasst die Emaille-Beschichtung Oxide von Bor, Silizium, Wismut und Zink. In der Emaille sind, bezogen auf das Gewicht der Emaille-Beschichtung, bevorzugt
1 bis 10 Gew.-%, insbesondere 2 bis 8 Gew.-%, B₂O₃
15 bis 40 Gew.-%, insbesondere 20 bis 35 Gew.-%, SiO₂
5 bis 45 Gew.-%, insbesondere 10 bis 40 Gew.-%, Bi₂O₃ und
7 bis 25 Gew.-%, insbesondere 8 bis 20 Gew.-%, ZnO enthalten.

Die Emaille-Beschichtung bzw. die Emaille-Zusammensetzung umfasst ferner bevorzugt mindestens ein alkalisches Oxid, insbesondere Kaliumoxid, bevorzugt mit einem Gehalt von höchstens 5 Gew.-%. Die Emaille-Beschichtung bzw. die Emaille-Zusammensetzung enthält ferner bevorzugt Titanoxid (TiO₂), vorzugsweise in Mengen im Bereich von 1 bis 10 Gew.-%, insbesondere von 2 bis 7 Gew.-%.

In der Regel enthält die Emaille-Beschichtung ein oder mehrere Pigmente. Die Pigmente umfassen bevorzugt ein oder mehrere Oxide, ausgewählt aus Oxiden von Chrom, Kupfer, Eisen, Mangan, Kobalt, Nickel oder Mischoxiden von zwei oder mehr dieser Metalle. Beispiele sind Kupfer- und/oder Eisenchromate. Der Anteil des oder der Pigmente in der Emaille-Beschichtung kann z.B. im Bereich von 8 bis 20 Gew.-%, bevorzugt 3 bis 12 Gew.-% liegen, insbesondere, wenn Kupferchromat als Pigment verwendet wird.

Die Emaille-Beschichtung weist z.B. eine Dicke im Bereich von 5 nm bis 30 nm nach dem Heizprozess auf.

Unabhängig davon, ob die Emaille-Beschichtung als erste oder dritte Schicht aufgebracht wird, können die dafür üblichen Auftragsverfahren eingesetzt werden. Die Emaille-Beschichtung wird vorzugsweise durch Siebdruck aufgebracht, in der Regel mustermäßig. Hierzu wird ein Siebdrucksieb über der zu beschichtenden Oberfläche platziert, wobei die Siebmaschen in den Bereichen, die nicht beschichtet werden sollen, verschlossen sind. Nach Aufbringen der Emaille-Zusammensetzung auf das Sieb wird eine Rakel verwendet, um die Zusammensetzung in den Bereichen mit offenen Maschen durch das Sieb zu drücken, um die zu beschichtende Oberfläche mustermäßig zu beschichten. Die Emailleschicht wird dann bei erhöhten Temperaturen eingebrannt, vorzugsweise bei einer Temperatur im Bereich von 600°C bis 700°C. Das Einbrennen erfolgt bevorzugt während einer Biegebehandlung und/oder einem Tempern des Glasprodukts.

Vorzugsweise ist die Emaille-Beschichtung undurchsichtig und/oder hat eine schwarze Farbe. Bei der Emaille-Beschichtung handelt es sich in der Regel um eine teilflächige bzw. mustermäßige Beschichtung auf der Scheibe, d.h. das Glasprodukt ist nicht ganzflächig mit der Emaille-Beschichtung versehen. In einer bevorzugten Ausführungsform ist die Emaille-Beschichtung in Form eines Rahmens im Randbereich der Scheibe aufgebracht.

Die Fläche der funktionalen Schicht, insbesondere der aus einem Schichtstapel gebildeten funktionalen Schicht, kann z.B. mindestens 70%, bevorzugt mindestens 80%, oder sogar im Wesentlichen die gesamte Fläche der Scheibenfläche ausmachen. Es ist bevorzugt, dass die Fläche der funktionalen Schicht vollflächig auf der Scheibe ausgebildet ist, außer dass ein um die Scheibe umlaufender Randbereich der Scheibe frei bleibt. Die Fläche der Emaille-Beschichtung kann z.B. höchstens 40%, bevorzugt höchstens 25% und bevorzugter höchstens 15% der Fläche der funktionalen Schicht ausmachen.

Das erfindungsgemäße Aufbringen umfasst ferner das Aufbringen einer Oxid enthaltenden Schutzschicht auf die aufgebrachte erste Beschichtung durch atmosphärische Plasmaabscheidung (APD), wobei die erste Beschichtung die Emaille-Beschichtung oder bevorzugt die funktionale Beschichtung ist.

Die atmosphärische Plasmaabscheidung ist ein bekanntes Verfahren. Dabei wird ein Plasma bei Atmosphärendruck bzw. Normaldruck eingesetzt. Vorzugsweise wird als atmosphärische Plasmaabscheidung eine plasmaunterstützte chemische Gasphasenabscheidung (PECVD) bei Atmosphärendruck verwendet. Um ein Gas in den Plasmazustand zu überführen, muss eine genügend große Zahl an freien Ladungsträgern erzeugt werden. Die dazu erforderliche sehr hohe Energie kann auf unterschiedliche Weise zur Verfügung gestellt werden.

Bei einem Lichtbogen-Plasma (Bogenentladung) wird diese z.B. durch das Anlegen einer hohen elektrischen Spannung zwischen zwei Elektroden induziert. Es gibt Atmosphärendruck-Plasmaquellen, bei denen ein Lichtbogen zur Aktivierung von Gasen genutzt wird. Der Lichtbogen kann z.B. über mehrere Zentimeter linear zwischen zwei Elektroden generiert und von Prozessgasen umströmt werden.

Eine bevorzugte Plasmaquelle sind Atmosphärendruck-Plasmajets. Bei diesen Vorrichtungen wird ein Plasma im Inneren der Vorrichtung erzeugt und durch eine Strömung aus dem Plasmajet heraus in die umgebende Atmosphäre transportiert.

Atmosphärendruck-Plasmajet-Systeme werden z.B. von der Firma Plasmatreat GmbH, Steinhagen, Deutschland, kommerziell vertrieben (z.B. FG5001 und FG5005). Atmosphärendruck-Plasmajet-Systeme weisen in der Regel einen Generator, einen Transformator und eine Düse auf. Die Düse bildet den eigentlichen Plasmajet.

Bei der atmosphärischen Plasmaabscheidung, insbesondere PECVD bei Atmosphärendruck, werden chemische Verbindungen als Precursoren in das Plasma eingebracht. Precursoren sind Materialien, aus denen im Plasma über Elektronenstöße und chemische Reaktionen die gewünschten Beschichtungen gebildet werden.

Die Oxid enthaltende Schutzschicht kann ein Oxid von mindestens einem Element ausgewählt aus Aluminium, Silizium, Titan, Zink, Zirkonium oder Zinn enthalten, wobei ein Oxid von Silizium oder Siliziumoxid bevorzugt ist.

Bei der atmosphärischen Plasmaabscheidung werden als Precursoren entsprechende Verbindungen, insbesondere organische Verbindungen, von Aluminium, Silizium, Titan, Zink, Zirkonium oder Zinn verwendet, wobei ein organische Gruppen enthaltendes Silan oder ein organische Gruppen enthaltendes Siloxan bevorzugt sind.

Beispiele für bevorzugte Precursoren sind insbesondere Hexamethyldisiloxan (HMDSO), Tetramethylsilan (TMS) und Tetraethoxysilan (TEOS), wobei HMDSO bevorzugt ist. Damit können Oxide von Silicium mit einem variablen Kohlenwasserstoffanteil (SiO2:CH) bzw. quarzähnliche SiO₂-Schichten als Oxid enthaltende Schutzschichten abgeschieden werden.

In einer besonders bevorzugten Ausführungsform handelt es sich bei der Schutzschicht um eine sogenannte SiOxCyHz-Schicht (Oxide von Silicium mit einem variablen Kohlenwasserstoffanteil), die z.B. durch Plasmapolymerisation von HMDSO gebildet werden kann. Die stöchiometrische Zusammensetzung hängt z.B. von den Abscheidungsbedingungen ab. Nach einer bevorzugten Ausführungsform dieser Erfindung ist die APD-Beschichtung vorzugsweise eine siliziumorganische Schicht (SiOxCyHz), die durch Einspritzen von Hexamethyldisiloxan (HMDSO) als flüssige Vorstufe in die Plasmadüse erhalten werden kann.

In einer bevorzugten Ausführungsform beträgt die Auftragsgeschwindigkeit 10 bis 500 mm/s.

Die Oxid enthaltende Schutzschicht weist bevorzugt eine Dicke von mindestens 20 nm, bevorzugter mindestens 30 nm, besonders bevorzugt mindestens 40 nm auf, z.B. im Bereich von 20 nm bis 2 µm, bevorzugt 30 nm bis 1 µm, bevorzugter 40 nm bis 500 nm und besonders bevorzugt 80 nm bis 300 nm.

Die Oxid enthaltende Schutzschicht ist in dem fertigen Glasprodukt, insbesondere dem Verbundglas, zwischen der funktionalen Beschichtung und der Emaille-Beschichtung angeordnet, wobei eine Seite der Schutzschicht direkt mit der funktionalen Beschichtung in Kontakt ist und die andere Seite der Schutzschicht direkt mit der Emaille-Beschichtung in Kontakt ist. Es versteht sich, dass die Schutzschicht nur an den Bereichen aufgebracht werden muss, wo ansonsten die funktionale Beschichtung und die Emaille in Kontakt treten würden. Im Allgemeinen wird die Schutzschicht daher teilflächig, bevorzugt in Form eines Rahmens, entsprechend der Lage der Emaille aufgebracht.

Die Oxid enthaltende Schicht kann z.B. mindestens 40 Gew.-%, mindestens 50 Gew.-% oder mindestens 60 Gew.-% oder mindestens 80 Gew.-% oder mindestens 90 Gew.-% Oxid enthalten oder aus Oxid bestehen, wobei dies auch Schichten umfasst, die Verunreinigungen enthalten, ohne ihre Eigenschaften zu beeinflussen. Unter Oxid wird hierbei insbesondere SiO₂ und auch SiOxCyHz (einschließlich des organischen Anteils) verstanden.

Wenn das Glasprodukt ein Verbundglas ist, wird die Scheibe mit der Beschichtung wie vorstehend beschrieben mit einer zweiten Scheibe angeordnet, wobei zwischen den Scheiben eine oder mehrere Zwischenschichten platziert werden. Die Anordnung ist bevorzugt so, dass die beschriebene Beschichtung auf der Fläche 2 angeordnet ist. Die Anordnung wird dann unter Erwärmen und gegebenenfalls Anwenden von Druck unter Bildung der Verbundscheibe verklebt. Bei Bedarf können die Scheiben gebogen werden, was vorteilhafterweise nach der Aufbringung der Schutzschicht erfolgt.

Die Erfindung betrifft auch Glasprodukt, das nach dem erfindungsgemäßen Verfahren wie vorstehend beschrieben erhältlich ist. Das Glasprodukt ist bevorzugt ein Verbundglas oder eine Doppelverglasungseinheit.

Das Glasprodukt, insbesondere Verbundglas oder Doppelverglasungseinheit, kann eine Verglasung für ein Bauwerk oder für ein Fahrzeug sein. Das Fahrzeug kann Fahrzeug für Land, Schiene, Meer oder Luft sein. Bevorzugt ist das Fahrzeug ein Kraftfahrzeug wie ein PKW. Das Glasprodukt, insbesondere Verbundglas, ist besonders bevorzugt für ein Fahrzeugdach oder eine Windschutzscheibe, insbesondere für Kraftfahrzeuge.

Die Erfindung wird im Folgenden mithilfe von Ausführungsbeispielen anhand der beigefügten Figuren näher erläutert, welche die Erfindung in keiner Weise einschränken sollen. Die beigefügten Figuren sind schematische Darstellungen und nicht maßstabsgetreu.

Es zeigen:
Fig. 1 eine Explosionsansicht eines Beispiels für ein erfindungsgemäßes Glasprodukt
Fig. 2 eine schematische Zeichnung einer optischen Aufnahme eines Prüfprodukts
Fig. 3 eine schematische Zeichnung einer FIB-TEM-Aufnahme eines Prüfprodukts.

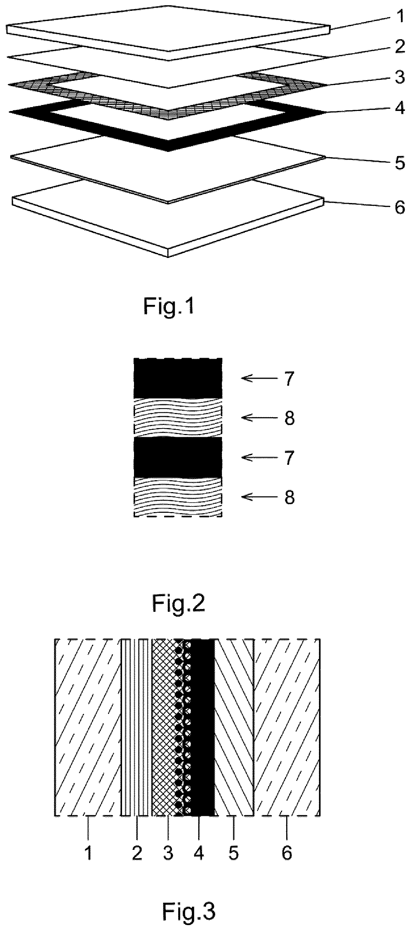

In Fig. 1 ist eine Explosionsansicht eines erfindungsgemäßen Glasprodukts gezeigt. Es handelt sich um ein Verbundglas, das z.B. als Sonnendach in einem Automobil geeignet ist. Das Verbundglas weist eine Außenscheibe 1 und eine Innenscheibe 6 auf. Beide sind aus Floatglas. Auf der nach innen gerichteten Seite der Außenscheibe (= Fläche 2) ist abgesehen von einem umlaufenden Randbereich eine IR-reflektierende Beschichtung 2 ganzflächig aufgebracht. Die IR-reflektierende Beschichtung ist aus einem Schichtstapel aus vielen Schichten aufgebaut, der mehrere Si₃N₄-Schichten mit einer Dicke von etwa 20 bis 40 nm umfasst. Der Schichtstapel umfasst u.a. auch elektrisch leitfähige Schichten wie Ag-Schichten. Weitere Schichten im Schichtstapel sind Anpassungsschichten wie ZnO und Glättungsschichten wie Zink-Zinn-Mischoxid mit Schichtdicken von etwa 2 bis 20 nm. Ein Beispiel für einen geeigneten Schichtstapel als IR-reflektierende Beschichtung ist z.B. in Tabelle 1 der WO 2017/198362 wiedergegeben. Ferner umfasst das Verbundglas eine Emaille-Beschichtung 4, die ein Borosilikat von Wismut und Zink umfasst. Die Zusammensetzung der Email kann z.B. eine der Zusammensetzungen B bis F in Tabelle 1 der WO 2019/106264 sein. Die Emaille-Beschichtung enthält Pigmente und ist bevorzugt von schwarzer Farbe, wobei sie teilflächig in Form eines Rahmens im Randbereich des Glasprodukts vorliegt. Insbesondere im Baubereich sind auch Emaillen mit Designs und Logos in anderen Farben möglich. Zwischen der IR-reflektierende Beschichtung 2 und der Emaille-Beschichtung 4 befindet sich die Oxid enthaltende Schutzschicht 3, die aus einem Oxid von Silizium gebildet ist, d.h. eine SiOxCyHz-Schicht (SiO mit variablem Kohlenstoffanteil). Die Schutzschicht liegt entsprechend der Emaille-Beschichtung teilflächig in Form eines Rahmens vor. Die Innenscheibe 1 ist mithilfe einer dazwischenliegenden Zwischenschicht 5 aus einer PVB-Folie mit der zweiten Scheibe 6 (Innenscheibe) verbunden.

Die Schutzschicht 3 in einem Glasprodukt gemäß Fig. 1 wird durch atmosphärische Plasmaabscheidung (APD) lokal in den gewünschten Bereichen auf der IR-reflektierenden Beschichtung 2 aufgebracht. Vor Abscheidung der Schutzschicht wird die Funktionsschicht gereinigt. Anschließend wird die Emaille-Beschichtung 4 durch Siebdruck rahmenmäßig aufgebracht. Da die APD mit einer relativ hohen Geschwindigkeit durchgeführt werden kann, die mit der Zykluszeit der industriellen Fertigung von Verbundscheiben kompatibel ist, kann sie leicht in bestehende Anlagen implementiert werden.

Um das Konzept einer Schutzschicht durch atmosphärische Plasmaabscheidung zu prüfen, wurde eine 120 nm dicke SiOxCyHz-Schicht auf die IR-reflektierende Beschichtung 2 (Kappa 14V 0,9 Ohm-Beschichtung) im Bereich von zwei Streifen mit etwa 20 mm Breite und 20 mm Abstand aufgebracht. Auf diese Weise wurden Streifen mit Schutzschicht und Streifen ohne Schutzschicht gebildet.

Danach wurde die beschichtete Scheibe teilweise mit einer Standard-Emaille für Automobilanwendungen beschichtet und in einem Labor-Testofen wärmebehandelt, um den industriellen Vorbrenn- und Biegeprozess zu simulieren (Vorbrennen für 120s bei 630°C (~580°C am Glas am Ende des Zyklus), Brennen für 480s bei 630°C (∼600°C am Glas am Ende des Zyklus). Der letzte Schritt war die Laminierung mit PVB und einem Gegenglas.

Das hergestellte Prüfprodukt wurde photographiert. Eine schematische Zeichnung der Aufnahme ist in Fig. 2 gezeigt.

Die Wirkung der SiOxCyHz-Schutzschicht ist optisch unmittelbar erkennbar (vgl. Fig. 2). Die durch die funktionelle IR-reflektierende Schicht hindurch sichtbare Farbe der Emaille-Beschichtung änderte sich in den Bereichen ohne Schutzschicht aufgrund der Wechselwirkung zwischen der funktionalen Schicht und der Emaille grau (ohne Schutzschicht 8). In dem Bereich mit Schutzschicht änderte sich die Farbe der Emaille nicht und bleibt schwarz, wie sie sein sollte (mit Schutzschicht 7).

Die Reaktion der verschiedenen Beschichtungen während der Wärmebehandlung wurde durch eine FIB-TEM-Analyse (Focused Ion Beam-Transmissionselektronenmikroskop) des fertiggestellten Probestücks analysiert. Eine schematische Zeichnung der erhaltenen Aufnahme ist in Fig. 3 gezeigt. Der Querschnitt wurde vor und nach dem Brennen erstellt. Fig. 3 zeigt die Analyse nach dem Heizen. Die Schichtdicke der SiOxCyHz-Schutzschicht ist nach der Erwärmung geringer. Das Ergebnis zeigt die Wechselwirkung zwischen der Emaille und der Schutzschicht (als Opferschicht), während die funktionelle IR-reflektierende Schicht vor der Reaktion mit der Emaille geschützt war. Die funktionelle Beschichtung und der Emaille sind durch die schützende, APD SiOxCyHz-Schicht gut voneinander getrennt. Die Wechselwirkung zwischen der funktionellen Beschichtung und der Emaille wird gehemmt.

Die Aufbringung einer SiOxCyHz-Beschichtung durch atmosphärisches Plasma kann eine Schutzschicht liefern, die dick und dicht genug ist, um eine funktionale Beschichtung und eine Emaille auf derselben Glasoberfläche aufzubringen, ohne die sichtbare Qualität des Produkts zu beeinträchtigen.

### Bezugszeichenliste

- 1: Scheibe, beschichtete Scheibe, z.B. Außenscheibe
- 2: funktionale Beschichtung, funktionale Schicht
- 3: Oxid enthaltende Schutzschicht
- 4: Emaille-Beschichtung
- 5: Zwischenschicht
- 6: zweite Scheibe, z.B. Innenscheibe
- 7: mit Schutzschicht
- 8: ohne Schutzschicht

## Patentansprüche

1. Verfahren zur Herstellung eines Glasprodukts, umfassend eine beschichtete Scheibe (1), die auf einer Seite eine funktionale Beschichtung (2) und eine Emaille-Beschichtung (4) aufweist, wobei zwischen der funktionalen Beschichtung (2) und der Emaille-Beschichtung (4) eine Oxid enthaltende Schutzschicht (3) angeordnet ist, wobei das Verfahren folgende Schritte umfasst:
a) Aufbringen einer ersten Beschichtung auf die Scheibe (1), wobei die erste Beschichtung die funktionale Beschichtung (2) oder die Emaille-Beschichtung (4) ist,
b) Aufbringen der Oxid enthaltenden Schutzschicht (3) auf die aufgebrachte erste Beschichtung durch atmosphärische Plasmaabscheidung und
c) Aufbringen einer dritten Beschichtung auf die aufgebrachte, Oxid enthaltende Schutzschicht (3), wobei die dritte Beschichtung die Emaille-Beschichtung (4) ist, wenn die erste Beschichtung die funktionale Beschichtung (2) ist, oder die dritte Beschichtung die funktionale Beschichtung (2) ist, wenn die erste Beschichtung die Emaille-Beschichtung (4) ist.

2. Verfahren nach Anspruch 1, wobei die funktionale Beschichtung (2) eine IR-reflektierende Beschichtung oder eine Sonnenschutzbeschichtung ist.

3. Verfahren nach Anspruch 1 oder 2,
wobei das Glasprodukt neben der beschichteten Scheibe (1) eine zweite Scheibe (6) umfasst, die mit der beschichten Scheibe (1) mit einer oder mehreren Zwischenschichten (5) unter Bildung eines Verbundglases verbunden wird oder wobei das Glasprodukt eine Doppelverglasungseinheit ist, bei der die beschichtete Scheibe (1) und eine zweite Scheibe über einen Rahmen als Abstandshalter miteinander verbunden werden.

4. Verfahren nach einem vorhergehenden Anspruch, wobei die erste Beschichtung die funktionale Beschichtung (2) ist und die dritte Beschichtung die Emaille-Beschichtung (4) ist.

5. Verfahren nach einem vorhergehenden Anspruch,
wobei die funktionale Beschichtung (2) ein Schichtstapel aus mehreren Schichten ist, und/oder
wobei die Schicht oder mindestens eine Schicht der funktionalen Beschichtung (2) ein Nitrid enthält oder daraus gebildet ist,
wobei es bevorzugt ist, dass die Schicht der funktionalen Beschichtung (2), die in Kontakt mit der Oxid enthaltenden Schutzschicht (3) ist, ein Nitrid enthält oder daraus gebildet ist
und wobei das Nitrid besonders bevorzugt ein Nitrid aus mindestens einem Element ausgewählt aus Aluminium, Silizium, Zirkonium und Titan ist, wobei Siliziumnitrid und/oder Silizium-Zirkonium-Mischnitrid ganz besonders bevorzugt sind.

6. Verfahren nach einem vorhergehenden Anspruch, wobei die Emaille-Beschichtung (4) Wismut, bevorzugt Borosilikat von Wismut oder Borosilikat von Wismut und Zink, enthält.

7. Verfahren nach einem vorhergehenden Anspruch, wobei die Emaille-Beschichtung (4) Oxide von Bor, Silizium, Wismut und Zink umfasst, wobei in der Emaille bevorzugt
1 bis 10 Gew.-%, insbesondere 2 bis 8 Gew.-%, B₂O₃
15 bis 40 Gew.-%, insbesondere 20 bis 35 Gew.-%, SiO₂
5 bis 45 Gew.-%, insbesondere 10 bis 40 Gew.-%, Bi₂O₃ und
7 bis 25 Gew.-%, insbesondere 8 bis 20 Gew.-%, ZnO,
bezogen auf das Gewicht der Emaille-Beschichtung (4), enthalten ist.

8. Verfahren nach einem vorhergehenden Anspruch,
wobei die Emaille-Beschichtung (4) ein oder mehrere Pigmente enthält und/oder
wobei die Emaille-Beschichtung (4) undurchsichtig ist und/oder eine schwarze Farbe aufweist, und/oder
wobei die Emaille-Beschichtung (4) eine teilflächige Beschichtung auf der Scheibe (1) darstellt, bevorzugt in Form eines Rahmens im Randbereich der Scheibe (1).

9. Verfahren nach einem vorhergehenden Anspruch,
wobei mindestens ein Teil der funktionalen Beschichtung (2) durch chemische Gasphasenabscheidung oder durch Sputtern, insbesondere durch ein Magnetron-Verfahren, abgeschieden wird, und/oder
wobei die Emaille-Beschichtung (4) durch Siebdruck aufgebracht wird.

10. Verfahren nach einem vorhergehenden Anspruch, wobei die Oxid enthaltende Schutzschicht (3) ein Oxid von mindestens einem Element ausgewählt aus Aluminium, Silizium, Titan, Zink, Zirkonium oder Zinn enthält, wobei ein Oxid von Silizium oder Siliziumoxid bevorzugt ist.

11. Verfahren nach einem vorhergehenden Anspruch, wobei die Oxid enthaltende Schutzschicht (3) eine Dicke von mindestens 30 nm aufweist.

12. Verfahren nach einem vorhergehenden Anspruch, wobei
bei der atmosphärischen Plasmaabscheidung ein organisches Silan oder Siloxan, insbesondere Hexamethyldisiloxan (HMDSO), Tetramethylsilan (TMS) oder Tetraethoxysilan (TEOS), als Precursor für die Schutzschicht eingesetzt wird, und/oder
die Oxid enthaltende Schutzschicht (3) eine SiOxCyHz-Schicht ist.

13. Glasprodukt, erhältlich nach einem Verfahren nach einem der Ansprüche 1 bis 12, bevorzugt ein Verbundglas oder eine Doppelverglasungseinheit.

14. Glasprodukt nach Anspruch 13, welches eine Verglasung für ein Bauwerk oder für ein Fahrzeug, insbesondere ein Kraftfahrzeug, ist, wobei das Glasprodukt bevorzugt eine Windschutzscheibe oder ein Fahrzeugdach ist.

15. Glasprodukt nach Anspruch 14 wobei das Kraftfahrzeug ein Fahrzeug zu Lande, zu Wasser oder in der Luft ist, insbesondere ein Automobil, ein Lastkraftwagen, ein landwirtschaftliches Nutzfahrzeug, ein Bus, ein Flugzeug oder ein Schienenfahrzeug, insbesondere ein Zug.
